(19) Europäisches Patentamt / European Patent Office / Office européen des brevets

(11) **EP 2 877 041 B1**

(12) **FASCICULE DE BREVET EUROPEEN**

(45) Date de publication et mention de la délivrance du brevet:
**30.03.2016 Bulletin 2016/13**

(21) Numéro de dépôt: **13730001.8**

(22) Date de dépôt: **29.05.2013**

(51) Int Cl.:
*A23G 1/30* *(2006.01)*  *A23G 1/48* *(2006.01)*
*A23G 1/34* *(2006.01)*  *A23G 1/00* *(2006.01)*
*A23L 33/20* *(2016.01)*

(86) Numéro de dépôt international:
**PCT/FR2013/051196**

(87) Numéro de publication internationale:
**WO 2013/178945 (05.12.2013 Gazette 2013/49)**

(54) **PROCEDE DE PREPARATION D'UN MELANGE COMPRENANT DES GRAINS D'UNE PLANTE DU GENRE THEOBROMA**

VERFAHREN ZUR HERSTELLUNG EINES GEMISCHES MIT SAATGUT EINER PFLANZE DER GATTUNG THEOBROMA

METHOD FOR PREPARING A MIXTURE INCLUDING SEEDS OF A PLANT OF THE THEOBROMA GENUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2012 FR 1255057**

(43) Date de publication de la demande:
**03.06.2015 Bulletin 2015/23**

(73) Titulaire: **Barry Callebaut AG**
**8005 Zürich (CH)**

(72) Inventeurs:
• **TROPLIN, Philippe**
  **78250 Meulan (FR)**
• **JACQUET, Gauthier**
  **78250 Meulan (FR)**

(74) Mandataire: **McDade, Sophie V.G.A.**
**Cabinet LLR**
**11, boulevard de Sébastopol**
**75001 Paris (FR)**

(56) Documents cités:
WO-A1-2008/043058    US-A- 4 435 436
US-A- 4 784 866       US-A- 5 009 917

• HODA H M FADEL ET AL: "Cocoa substitute: Evaluation of sensory qualities and flavour stability", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 223, no. 1, 1 mai 2006 (2006-05-01), pages 125-131, XP019328353, ISSN: 1438-2385, DOI: 10.1007/S00217-005-0162-3
• LAU B ET AL: "COCOA SUBSTITUTES A FUTURE MUST", MODERN DAIRY, TORONTO, CA, vol. 59, no. 3, 1 mai 1980 (1980-05-01), pages 12-14, XP008015822, ISSN: 0026-7651
• NOORDEN A C: "COCOA POWDER ALTERNATIVES, SOME EXPERIENCES FROM PRACTICE", CMM CONFECTIONERY MANUFACTURE AND MARKETING, J.G. KENNEDY & CO., LTD., LONDON, GB, vol. 18, no. 10, 1 octobre 1981 (1981-10-01), page 32/33, XP008015817, ISSN: 0007-8654
• BISPO E S ET AL: "Alkalinization process for cocoa (Theobroma cacao L.) nibs and quality evaluation of the powder by response surface methodology", JOURNAL OF FOOD SCIENCE AND TECHNOLOGY, SPRINGER (INDIA) PRIVATE LTD, INDIA, vol. 39, no. 1, 1 janvier 2002 (2002-01-01), pages 14-20, XP009096602, ISSN: 0022-1155

EP 2 877 041 B1

**Description**

La présente invention concerne le domaine de la préparation d'un mélange comprenant du cacao et de la caroube présentant des caractéristiques de goût, de texture et de couleur similaire à celles du cacao. La présente invention concerne également le domaine des procédés de préparation de compositions de cacao ou de mélanges comprenant du cacao et de la caroube, au moyen d'un logiciel (ou [produit] programme d'ordinateur, ces deux termes étant utilisés dans la présente demande de manière uniforme) de formulation. La présente invention concerne également le domaine des utilisations des mélanges obtenus par ces procédés dans l'industrie alimentaire. Avec la recrudescence de l'obésité et des maladies qui y sont associées, de nombreuses dispositions ont été prises afin de limiter les apports en sucre et lipide, notamment des aliments gras et sucrés comme les confiseries à base de chocolat. Typiquement, la poudre de cacao est obtenue à partir de fèves de cacao décortiquées (appelés grains), provenant du cacaoyer ou *Théobroma cacao.*

Les grains subissent les étapes successives d'un procédé de fabrication dont l'étape majeure consiste à alcaliniser le mélange de grains de cacao. Le mélange est ensuite torréfié, broyé en masse, pressé pour en extraire d'une part le beurre de cacao et d'autre part le tourteau qui sera finalement broyé en poudre fine.

Le goût et la couleur de la poudre de cacao dépendent principalement de l'espèce de *Théobroma (cacao, grandiflorum etc.)* récoltée, ainsi que des étapes de torréfactions subies lors de la préparation.

La poudre de cacao est connue pour être très riche en lipides et peu sucrée.

Afin de limiter la quantité de lipides présents, diverses solutions ont été élaborées. L'une d'elles consiste à substituer au moins une partie de la poudre de cacao par de la poudre de caroube ayant un goût proche de celui du cacao, riche en sucres naturels et pauvre en lipides.

La caroube est le fruit du caroubier ou *Ceratonia siliqua.* Le caroubier est cultivé sur le pourtour de la mer méditerranée, notamment en Espagne, en Italie du sud et au Maroc. La caroube se présente sous une forme de gousse pendante constituée d'une enveloppe renfermant des graines très dures.

Outre la consommation directe de caroube, il est généralement tiré du caroubier deux produits très différents utilisés abondamment dans l'industrie alimentaire : la farine de caroube et la gomme de caroube.

La gomme de caroube provient des graines, tandis que la farine provient de la pulpe de caroube. La gomme de caroube est utilisée dans l'industrie agro-alimentaire comme additif (code E410) pour les glaces, les pâtisseries, les aliments diététiques (sans gluten). La gousse de caroube est la seule partie de ce fruit qui n'est pas entièrement valorisée dans l'industrie alimentaire humaine, elle est le plus souvent utilisée comme aliment énergétique pour le bétail.

La poudre de caroube provient de gousses de caroube vidée de son contenu de graines. Les gousses ainsi décortiquées sont ensuite broyées/concassées, grillées, puis pilées afin d'obtenir une poudre.

La poudre de caroube possède des propriétés nutritionnelles intéressantes de par sa composition, mais également, de part certains effets biologiques positifs qu'elle a sur le métabolisme, ce qui a été démontré au cours de nombres études.

Elle possède un taux de sucres élevé (glucose et du saccharose), de l'amidon, des protéines, des tannins, des sels minéraux (calcium, phosphore, magnésium, silice, fer), de la pectine et se caractérise principalement par une faible teneur en lipides et par l'absence totale de caféine et de théobromine.

Il est connu d'obtenir des extraits riches en composés phénoliques à partir de mélanges de noix et/ou de fruits secs en utilisation un étape préliminaire d'alcalinisation (WO2012001201 au nom de Morella Nuts).

Les propriétés diététiques de la caroube ainsi que son faible coût de production, font d'elle un produit privilégié pour la substitution du cacao dans les produits chocolatés.

De manière générale, l'ajout de poudre de caroube modifie considérablement les propriétés des poudres auxquelles elle est ajoutée, en particulier de la poudre de cacao.

Typiquement, le mélange cacao et caroube se fait directement par un mélange des deux poudres obtenues via les procédés donnés ci-avant.

Toutefois, il est connu que ce mélange entre la poudre de caroube et la poudre de cacao présente des inconvénients de goût, de couleur et de texture.

En effet, la poudre de caroube apporte un aspect fibreux désagréable, augmente significativement l'acidité du mélange et altère la couleur brune du cacao.

Afin d'atténuer les aspects négatifs précités et de diminuer par l'ajout de caroube la teneur en lipide et en sucre de ces poudres, la présente invention a pour objet, un procédé de préparation d'un mélange comprenant des grains d'au moins une espèce du genre *Théobroma* et des gousses fragmentées de caroube, caractérisé en ce qu'il comporte les étapes consistants à :

- former un mélange initial comprenant lesdits grains et de 2,5 % à 25 % en poids du mélange initial desdites gousses fragmentées de caroube, et
- ajouter une composition alcaline audit mélange initial pour obtenir un mélange alcalinisé.

Le genre *Théobroma* est constitué de 22 espèces (famille des *Sterculiaceae) qui* sont les suivantes : *Théobroma abovatum, Théobroma angustifolium, Théobroma bicolor, Théobroma cacao* L., *Théobroma canumanense, Théobroma chocoense, Théobroma cirmolinae, Théobroma glauca, Théobroma grandiflorum* (ou cupuaçu), *Théobroma leiocarpa, Théobroma mammosum, Théobroma mariae, Théobroma martiana, Théobroma microcarpa, Théobroma nemorale, Théobroma pentogona, Théobroma purpureum, Théobroma simiarum, Théobroma sinuosum, Théobroma stipularum, Théobroma speciosa, Théobroma subincana, Théobroma velutinum.*

Le procédé selon l'invention est basé sur une étape de co-alcalinisation d'un mélange initial comprenant des grains d'au moins une espèce du genre *Théobroma,* et plus particulièrement *Théobroma cacao L.,* et des gousses fragmentées de caroube.

Par « mélange initial » on entend, un mélange de grains de *Théobroma* et de fragments bruts de gousses de caroube, qui va subir l'étape de « co-alcalinisation ».

Cette étape permet d'améliorer les propriétés du produit final, notamment sous forme de poudre et en particulier, la texture, l'acidité, le goût ainsi que la couleur du produit, qui tendent vers des propriétés similaires à celles du cacao.

Par « co-alcalinisation », on entend l'application de l'étape d'alcalinisation typiquement utilisée dans le procédé pour la préparation de la poudre de cacao, à un mélange initial comprenant des grains d'au moins une espèce du genre *Théobroma* et des gousses fragmentées de caroube.

Selon un mode préféré de réalisation de l'invention, les grains sont en majorité ou en totalité de l'espèce *Théobroma cacao L.*

Le procédé selon l'invention présente également l'avantage d'utiliser des gousses fragmentées et séchées de caroube, afin de limiter la teneur en lipide du mélange final. Il permet également d'atténuer la texture désagréable ainsi que la dégradation de couleur du mélange résultat de l'adjonction de caroube en poudre. De surcroit, le procédé selon l'invention régule l'acidité du mélange.

Avantageusement, le mélange initial est alcalinisé avec une composition alcaline comprenant au moins un composé choisi parmi le groupe constitué par les carbonates alcalins et les hydroxydes alcalins.

De préférence, la composition alcaline comprend du carbonate de potassium, du carbonate de sodium et/ou du carbonate de calcium.

Typiquement, le cacao présente différents pH pouvant aller de 5,6 à 8,2. Il dépend de la variété de *Théobroma cacao* utilisée et pour des poudres très alcalines de cacao naturel, le pH peut descendre à des valeurs avoisinant les 4,5. Ce pH a un impact sur l'acidité du mélange, ainsi que sur la couleur finale de la poudre de cacao.

Afin de respecter les valeurs naturelles d'acidité et de couleur d'un cacao classique, la composition alcaline est utilisée dans le procédé selon l'invention à des quantités variant de 0,2Kg à 2Kg pour 15Kg de mélange initial.

Selon un aspect particulier de l'invention, le mélange initial comprend entre 7,5% et 12,5%, de préférence de 8,5% à 11,5, de gousses fragmentées de caroube en poids total du mélange, bornes incluses.

Selon une caractéristique optionnelle de l'invention, le mélange initial comprend des fragments de gousses de caroubes ayant une taille comprise entre 1mm à 20mm, bornes incluses. Par taille, on entend la valeur de la plus grande dimension du fragment.

Avantageusement, le procédé selon l'invention comprend les étapes supplémentaires consistant à torréfier, puis broyer le mélange alcalinisé afin d'obtenir une masse comprenant entre 2,5% et 25% en poids, de caroube, bornes incluses.

L'étape de torréfaction permet un dessèchement des fèves de cacao, le développement des arômes et le brunissement du produit.

Il existe différents degrés de torréfaction que l'on fait varier en fonction du type de cacao souhaité, de la variété utilisée, ainsi que du degré de dessiccation et de la grosseur des fèves etc.

Avantageusement, la masse obtenue par le procédé selon l'invention comprend, bornes incluses, entre 2,5% et 25% en poids, de caroube.

Selon un mode de réalisation préféré de l'invention, le procédé comprend les étapes supplémentaires consistant à :

- presser la masse afin d'en extraire le beurre, et
- broyer le tourteau afin d'obtenir une poudre comprenant au moins une espèce du genre *Théobroma* et entre 5 % et 50 % de caroube, en poids total de la poudre, bornes incluses.

De préférence, la poudre obtenue comprend du cacao et entre 5 % et 50 % de caroube en poids total de la poudre, bornes incluses.

La présente invention concerne également, un procédé de fabrication d'une poudre issue d'un mélange initial alcalinisé comprenant un mélange initial comprenant des grains d'une espèce végétale du genre *Théobroma,* et une composition alcaline comprenant au moins un composé alcalin, et ayant un pH et/ou une couleur prédéfini, ladite couleur étant définie **par les paramètres L\*, C\* et/ou h°,** ledit procédé étant caractérisé en ce que :

- on entre le pH et/ou la couleur prédéfini dans un logiciel (ou [produit] programme d'ordinateur) de formulation paramétré,
- on obtient dudit logiciel le calcul des proportions du mélange initial alcalinisé,
- on réalise un mélange alcalinisé ayant lesdites proportions, et
- on réduit ce mélange initial alcalinisé en poudre.

L'espèce végétale est de préférence le *Théobroma cacao,* c'est-à-dire la plante dont les grains fournissent le cacao.

Selon un aspect préféré de l'invention ce procédé peut être utilisé pour obtenir une poudre comprenant des grains provenant d'une plante du genre Théobroma et de la caroube. Ce procédé peut ainsi avantageusement être utilisé pour déterminer très précisément la proportion des ingrédients nécessaire à la confection d'une poudre ayant des propriétés visuelles et gustative très proche d'une poudre de cacao type ou prédéterminée tout en préservant une certaine proportion de gousses de caroubes fragmentées.

Ainsi la proportion des gousses de caroube fragmentées de caroube peut être de 2,5% à 25% en poids du mélange initial, préférentiellement de 7,5% à 12,5% en poids total du mélange initial.

Selon un autre aspect préféré du procédé le logiciel de formulation est paramétré par la réalisation de courbes h°, C*, L* et/ou pH en fonction de la proportion des gousses fragmentées de caroube par rapport au mélange initial.

Selon un autre aspect préféré le procédé selon l'invention comprend une étape préliminaire de paramétrage dudit logiciel où lesdits paramètres sont obtenus en effectuant au moins une série de mesures de pH et/ou des paramètres L*, C* et h° sur des poudres obtenues à partir d'un même procédé mais à partir d'un mélange initial alcalinisé ayant des paramètres de composition variables et connus.

Selon ce procédé il est possible de faire varier ces mélanges initiaux alcalinisés uniquement :

a. par la proportion de la composition alcaline par rapport au poids total du mélange alcalinisé initial, et/ou

b. par la proportion relative des composés autres que la composition alcaline.

Selon un aspect particulièrement préféré du procédé, la composition alcaline comprend plus d'un composés alcalin, qui peuvent être tels que décrit ci-dessus, et les mélanges initiaux alcalinisés connus peuvent être de ceux qui varient uniquement par la concentration relative des composés alcalins de la composition alcaline. Ainsi, le logiciel de formulation est avantageusement paramétré par la réalisation de courbes h°, C*, L* et/ou pH réalisées en fonction de la proportion relative des composés alcalins dans la composition alcaline.

Le procédé de fabrication d'une poudre ayant un pH et/ou une couleur prédéfini peut être appliqué à des poudres qui, une fois l'identification des proportions des ingrédients nécessaires à sa fabrication selon ce procédé seront obtenues par le procédé de co-alcalinisation décrit précédemment et qui fait également partie de l'invention. En particulier le mélange alcalinisé initial déterminé peut être soumis à des étapes préliminaires successives de torréfaction, de broyage, d'extraction de matières grasses par pression qui précède l'étape de réduction du mélange en poudre.

Un autre aspect de l'invention porte sur un logiciel ou un [produit] programme d'ordinateur conçu pour mettre en oeuvre le procédé de fabrication d'une poudre décrit ci-dessus et/ou comprenant des portions/moyens/instructions de code de programme pour l'exécution dudit procédé lorsque ledit programme est exécuté sur un ordinateur. Avantageusement ledit programme est compris dans un support d'enregistrement de données lisible par ordinateur. Un tel support n'est pas limité à un support d'enregistrement portable tel qu'un CD-ROM mais peut également faire part d'un dispositif comprenant une mémoire interne dans un ordinateur (par exemple des RAM et/ou ROM), ou de dispositif à mémoires externes tels des disques durs ou des clefs USB.

Ledit logiciel, ou [produit] programme d'ordinateur, est avantageusement paramétré pour la préparation d'une poudre d'un mélange initial alcalinisé comprenant, un mélange initial comprenant des grains d'une espèce végétale du genre Théobroma, et une composition alcaline comprenant au moins un composé alcalin, et ayant un pH et/ou une couleur prédéfinie, ladite couleur étant définie par les paramètres L*,C* et/ou h°, ledit logiciel étant paramétré par la réalisation de courbes h°, C*, L* et /ou pH en fonction de la proportion de la composition alcaline dans la composition alcalinisé.

Selon un aspect préféré de l'invention ledit mélange initial comprend des gousses fragmentées de caroubes et ledit logiciel est paramétré par la réalisation de courbes h°, C*, L* et /ou pH en fonction de la proportion des gousses fragmentées de caroube par rapport au mélange initial.

Ladite composition alcaline peut également comprendre au moins deux composés alcalins et ledit logiciel peut avantageusement être paramétré par la réalisation de courbes h°, C*, L* et /ou pH en fonction de la proportion relative desdits composés alcalins.

Selon encore un autre aspect, l'invention porte également sur l'utilisation du logiciel de formulation tel que décrit ci-dessus et plus particulièrement sur sa mise en oeuvre par un ordinateur. Cette mise en oeuvre par un ordinateur permet le traitement des données physiques suscitées ainsi que l'exécution des étapes du procédé selon l'invention.

L'invention sera mieux comprise à la lecture des exemples qui suivent, accompagnées des figures. Ces exemples sont donnés uniquement à titre illustratif.

**Brève description des figures**

La Figure 1 représente un graphe illustrant les caractéristiques de différentes pates de truffes réalisées à l'exemple 2 soit avec de la poudre de cacao provenant d'un mélange initial pur ou de pâtes de truffe réalisées avec des poudres obtenues en accords avec le procédé selon l'invention.

La Figure 2 illustre les résultats de tests de significativité des impacts des facteurs sur les réponses au pH et couleur.

La Figure 3 illustre des profileurs de courbes obtenus à l'exemple 3 en utilisant un logiciel paramétré selon l'invention.

La Figure 4 représente le calcul des proportions d'un mélange suite au paramétrage d'un logiciel décrit dans l'exemple 3.

**Description des exemples**

**Exemple 1 : Comparaison entre une poudre préparée à partir d'un mélange initial ne comprenant que du cacao (sans caroube) et une poudre obtenue par un procédé selon l'invention à partir d'un mélange à base de cacao comprenant 20 % en poids de fragment de caroube.**

Des graines de cacao (100%) d'origine Côte d'Ivoire sont mélangées avec une solution de carbonate de potassium (3,126L d'eau + 0,493kg de carbonate de potassium), à l'aide d'un mélangeur de type mixeur de Barth® ayant une vitesse de rotation de l'agitateur de 40T/min et une puissance de moteur de 3Kw. Une fois l'alcalinisation effectuée, le mélange est torréfié. Pour cela, il est monté en température jusqu'à 120°C pendant une durée de 1h31 suppléée par un temps de maintien de 4 minutes à 120°C. On obtient du grain torréfié qui est broyé, affiné et tamisé (type de machine Retsch SM100®, puissance 1,5Kw, temps 2h15) puis pressé pour en extraire les matières grasses, principalement le beurre de cacao (la presse est de type Presse Vitali 3 pots® ayant une puissance de 480bar, durant 23'52h). Le tourteau ainsi obtenu est alors broyé par centrifugation (broyeur poudre Bauermeister® ayant une puissance de 2,2Kw) pour obtenir une poudre.

Un procédé identique est appliqué à un mélange initial comprenant 80% en poids de graines de cacao et 20% en poids de fragment de gousses de caroube de type Caroube d'Espagne obtenue par séchage des gousses, extraction des graines puis broyage. Les fragments de caroubes sont, par conséquent, co-alcalinisés avec les graines de cacao.

Les caractéristiques des composés obtenus aux diverses étapes de ce procédé sont contenus dans les tableaux I et II suivants :

Tableau I

| | | 100% Cacao | Cacao avec 20% de gousse de caroube | Observations |
|---|---|---|---|---|
| **Produit** | Origine | IC | IC(grains)/Espagne(caroube) | |
| **Alcalinisation (type SR)** | Poids du mélange initial | 15Kg | 12Kg grains + 3Kg Gousses de caroube fragmentées | Pas de différence |
| | Poids du mélange alcalinisé | 17,30Kg | 17,10Kg | |
| | Taux d'humidité du mélange alcalinisé | 22,28% | 20,85% | |
| | Temps | 1h06 | 1h07 | |

(suite)

| | | 100% Cacao | Cacao avec 20% de gousse de caroube | Observations |
|---|---|---|---|---|
| Torréfaction (Moyenne) | Poids du mélange final | 13,35Kg | 12,90Kg | Pas de différence |
| | Taux d'humidité du mélange final | 2,07% | 3,11% | |
| | Temps du procédé | 1h44 | 1h35 | Pas de différence |
| Broyage de la masse | Temps | 1h08 | 2h15 | Beaucoup de fibres dans la caroube. |
| | Poids après tamisage | 12,2Kg | 10,75Kg | |
| Pressage | Temps | 23,48minutes | 23,52minutes | Moins de beurre car la caroube n'en contient pas |
| | Poids du beurre | 5,85Kg | 4,05Kg | |
| | Poids du tourteau de cacao | 6,25Kg | 6,30Kg | |
| Broyage de la poudre | Temps | 52minutes | 47minutes | Pas de différence |
| | Poids | 6,10Kg | 6,20Kg | |

Tableau II : Analyse comparative de la poudre, du beurre et de la liqueur issus du mélange 100% cacao et du mélange cacao/20% de caroube.

| | | 100% Cacao | Cacao avec 20% de gousses de caroube |
|---|---|---|---|
| Analyse de la poudre | Matière grasse | 13,25% | 12,49% |
| | pH | 7,52 | 6,82 |
| | Couleur (L*/C*/h°) | 14,84/19,2/44 | 16,71/21,5/48,033 |
| | Taille des particules | Dv(90): 15,90$\mu$m | Dv(90): 18,11$\mu$m |
| | | | |
| Analyse du beurre | FFA | 1,82% | 2% |
| | Temps de cristallisation | 16 minutes | 19 minutes |
| | Temps mini à 0°C | 18,36minutes | 17,1 minutes |
| | Temps maxi à 0°C | 21,06minutes | 19,42 minutes |
| | Delta T | 2,7 | 2,32 |
| | Temps total | 63 minutes | 67 minutes |
| | Pente | 0,169 | 0,122 |
| | | | |
| Liqueur de cacao | Taille des particules (<75$\mu$m) | 99,30% | 98,71% |
| | Matière grasse | 54,49% | 46,23% |
| | Couleur (L*/C*/h°) | 6,9/11,1/33,4 | 16,7/21,5/48 |

Conclusion :

On peut observer que les propriétés physico-chimiques des deux poudres ou des deux liqueurs obtenues présentent peu de différences, sauf en ce qui concerne la teneur en matière grasse qui est inférieure dans la masse de cacao du mélange comprenant 20% en poids de caroube.

**Exemple 2 : Etude comparative de goût de recettes de pâte à truffes réalisées à base de poudre standard (100% cacao) et une poudre comprenant du cacao et de la caroube obtenue selon l'invention.**

Recettes testées :

- un standard, comprenant un mélange d'une poudre naturelle alcaline standard, sans caroube,
- l'essai 2, correspond à une pâte comprenant de la poudre de cacao fortement alcalinisée (type SR), coprocessée, à 40% de caroube, plus une poudre de cacao naturelle standard,
- l'essai 3, correspond à une pâte comprenant uniquement de la poudre coprocessée à 40% de caroube faiblement alcaline (type DP),
- l'essai 4, correspond à une pâte comprenant de la poudre de cacao naturelle standard ainsi qu'une poudre alcaline type SR standard, additionnées d'une poudre de caroube brute (sans cacao et non alcalinisée), provenant d'un fournisseur.

Toutes les poudres utilisées sont fortement dégraissées (10/12% de matière grasse).
Les recettes utilisées sont détaillées dans le tableau suivant :

Table III : Recettes testées

| Px | Code | | BASE | | ESSAI 2 | | | ESSAI 3 | | | ESSAI 4 | | |
| | | | FLD-I1346NH | | | | | | | | | | |
| | | | Qté | Px/T | Qté | caroube | Px/T | Qté | caroube | Px/T | Qté | caroube | Px/T |
|------|------|-----------------------------|------|------|------|---------|------|-------|---------|------|------|---------|------|
| | 2000 | Sucre | 33,33 | | 33,33 | | | 33,33 | | | 33,33 | | |
| | 7207 | Coprah | 27,03 | | 27,03 | | | 27,03 | | | 27,03 | | |
| | 7211 | Palmiste | 17,21 | | 17,21 | | | 17,21 | | | 17,21 | | |
| | 3742 | Lactosérum | 8,75 | | 8,75 | | | 8,75 | | | 8,75 | | |
| 4200 | 1800 | Poudre 10/12 Nat | 7,58 | 318 | 7,58 | | 318 | 0 | | | 6,06 | | 255 |
| 1260 | | Poudre caroube Nat (40%) | 0 | | 0 | | | 0 | | | 0 | | |
| 4200 | 1823 | Poudre 10/12 Alc | 5,85 | 246 | 0 | | | 0 | | | 4,68 | | 197 |
| 1260 | | Poudre caroube Alc SR (40%) | 0 | | 5,85 | 2,34 | 74 | 0 | | | 0 | | |
| 1400 | | DP coprocessée (40%) | 0 | | 0 | | | 13,43 | 5,37 | 188 | 0 | | |
| 1200 | | Caroube T&L | 0 | | 0 | | | 0 | | | 2,69 | 2,69 | 32 |
| | 6050 | Lécithine | 0,25 | | 0,25 | | | 0,25 | | | 0,25 | | |
| | | | 100 | 564 | 100 | 2,34 | 392 | 100 | 5,37 | 188 | 100 | 2,69 | 483 |

Fabrication du standard : Mélange d'une poudre naturelle alcaline (7 ,58% de la recette) avec une poudre alcaline SR (5,85% de la recette).

Fabrication Essai 2 : Mélange d'une poudre naturelle standard (7,58% de la recette) avec une poudre SR coprocessée à 40% de caroube (5,85% de la recette).

Fabrication Essai 3 : Utilisation d'une seule poudre DP coprocessée à 40% de caroube (13,43% de la recette).

Fabrication Essai 4 : Utilisation d'une poudre alcaline SR standard (4,68% de la recette) + une poudre naturelle standard (6,06% de la recette) + une poudre 100% caroube naturelle issue d'un fournisseur (2,69% de la recette).

Nat = naturelle

Alc = alcalinisée

10/12 = % de matière grasse

SR = type de poudre hautement alcalinisée

DP = type de poudre moyennement alcalinisée

T&L = poudre provenant d'un fournisseur

Une étude gustative comparative est réalisée sur la base des critères de couleur, d'appréciation, de texture, de douceur, d'astringence, de goût « chocolaté », d'alcalinité et d'amertume de la pâte à truffe.

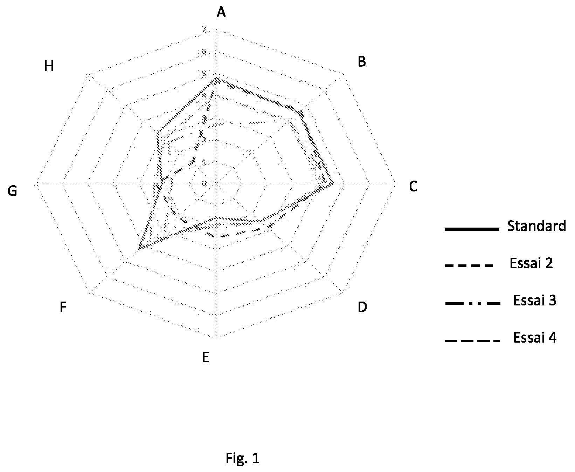

Les résultats sont donnés dans le graphe de la figure 1. Dans ce graphe les références A, B, C, D, E, F, G et H représentent les caractéristiques suivantes :

A: Couleur

B : Texture

C : sucré

D : Amertume

E : Astringence

F : Chocolat

G : Alcalinité

H : Appréciation.

Le graphe de la figure 1 montre les points de rapprochement de ces différents essais avec une recette de pâte à truffes à base d'une poudre de cacao 100% cacao.

<u>Résultats</u> : Moyenne des notes évaluées par les dégustateurs.

Table IV : Différences avec le standard

| Différence avec le standard | |
|---|---|
| Essai 2 | **3,61/7** |
| Essai 3 | **5,00/7** |
| Essai 4 | **5,39/7** |

Les échantillons sont considérés différents du standard si la différence est supérieure à 4. Pour une différence comprise entre 3 et 4, le produit est légèrement différent, mais reste acceptable. Si la différence est inférieure à 3 alors le produit est similaire au standard.

<u>Conclusions :</u>

Les essais 3 et 4 sont différent du standard et présente un goût de caroube trop marqué, notamment lors de l'utilisation d'une poudre de caroube brute, non alcalinisée (différence au standard de 5,39/7).

L'essai 2 présente une légère différence, mais est acceptable (3<3,61<4).

La pâte à truffes de l'essai 2 (à base de poudre de cacao naturelle et de poudre comprenant de la caroube alcalinisée) a sensiblement les mêmes propriétés que la pâte à truffes standard.

**Exemple 3 : Méthodologie de programmation d'un logiciel afin d'obtenir une poudre aux caractères prédéfinis de couleur et/ou de pH.**

Essais préliminaires permettant l'obtention des paramètres de programmation :

Des tests sont effectués sur des mélanges comprenant des grains de cacao et des fragments de gousses de caroube :

- type : gousse de caroube >8mm,
- origine : Espagne (caroube), Côte d'Ivoire (cacao).

Ces essais sont menés selon des paramètres constants de température (70°C), centrifugation (40rpm), seuls les pourcentages en caroube et la nature de la composition alcaline varient. Les étapes et caractéristique du procédé d'obtention des poudres sont telles que décrites à l'exemple 1.

Deux types d'alcalin sont utilisés pour cette étude. Le premier est le carbonate de potassium et le second, le carbonate de sodium. Les proportions de chacun sont définies dans le tableau V ci-après.

Tableau V

| SR | Quantité cacao Kg | Quantité % | caroube Kg | Eau Kg | $K_2CO_3$ Kg | $Na_2CO_3$ Kg |
|---|---|---|---|---|---|---|
| PC1 | 12,75 | 15 | 2,25 | 3,126 | 0,2467 | 0,2467 |
| 1 | 13,5 | 10 | 1,5 | 3,126 | 0,4935 | 0 |
| 2 | 12 | 20 | 3 | 3,126 | 0,2467 | 0,2467 |
| PC2 | 12,75 | 15 | 2,25 | 3,126 | 0,2467 | 0,2467 |
| 4 | 12,75 | 15 | 2,25 | 3,126 | 0 | 0,4935 |
| 5 | 12 | 20 | 3 | 3,126 | 0 | 0,4935 |
| 6 | 13,5 | 10 | 1,5 | 3,126 | 0,2467 | 0,2467 |
| 7 | 12 | 20 | 3 | 3,126 | 0,4935 | 0 |
| PC3 | 12,75 | 15 | 2,25 | 3,126 | 0,2467 | 0,2467 |
| 9 | 12,75 | 15 | 2,25 | 3,126 | 0,4935 | 0 |
| 10 | 13,5 | 10 | 1,5 | 3,126 | 0 | 0,4935 |

Le mélange est ensuite torréfier, puis broyé pour obtenir une masse d'où la matière grasse est extraite par pressage hydraulique. Le tourteau résultant de ce pressage est ensuite broyée en poudre.

Les masses (ou liqueurs) et poudres obtenues sont analysées selon les critères suivant : quantité de matières grasses, finesse, et couleur (L* ; C*, h°), les résultats sont donnés dans le tableau VI ci-dessous.

L* représente la clarté, C* représente le chroma (ou niveau de saturation) et h° représente l'angle de teinte (ou tonalité chromatique).

Tableau VI :

| • Masse | | | | | |
|---|---|---|---|---|---|
| Essais (SR) | MG | Finesse | L* | C* | h° |
| PC1 | 47,74 | 98,28 | 7,45 | 11,22 | 34,95 |
| 1 | 52,24 | 98,94 | 10,31 | 16,54 | 41,32 |
| 2 | 47,22 | 98,56 | 8,73 | 12,6 | 39,46 |
| PC2 | 49,21 | 98,62 | 8,43 | 12,72 | 37,49 |
| 4 | 49,31 | 99,01 | 7,82 | 11,77 | 37,02 |
| 5 | 46,03 | 98,68 | 8,47 | 12,37 | 37,04 |
| 6 | 50,65 | 99,29 | 8,32 | 12,37 | 36,55 |

(suite)

| • Masse | | | | | |
|---|---|---|---|---|---|
| Essais (SR) | MG | Finesse | L* | C* | h° |
| 7 | | | | | |
| PC3 | | | | | |
| 9 | 49,02 | 98,52 | 10,99 | 16,55 | 42,06 |
| 10 | | | | | |
| Essais (SR) | MG | pH | L* | C* | h° |
| PC1 | 11,79 | 7,5 | 14,16 | 22,7 | 55,23 |
| 1 | 10,17 | 6,83 | 20,6 | 24,61 | 50,02 |
| 2 | 11,08 | 7,31 | 16,2 | 20,43 | 48,65 |
| PC2 | 11,64 | 7,34 | 16,03 | 20,71 | 47,50 |
| 4 | 12,26 | 7,71 | 14,22 | 18,88 | 45,98 |
| 5 | 12,01 | 7,26 | 14,76 | 19,81 | 46,8 |
| 6 | 12,2 | 7,42 | 15,23 | 20,2 | 46,60 |
| 7 | 14,92 | 7,11 | 17,63 | 21,3 | 48,19 |
| PC3 | 12,63 | 7,48 | 14,96 | 20,14 | 46,24 |
| 9 | 11,01 | 6,67 | 20,71 | 24,81 | 50,26 |
| 10 | 11,07 | 7,84 | 13,09 | 17,56 | 44,76 |

Les résultats sont intégrés dans un logiciel classiquement utilisé dans l'analyse de données permettant de résoudre des problèmes statistiques, la création de plans d'expérience et de la modélisation statistique.

Il a été réalisé un plan factoriel, avec tout d'abord, l'estimation des coefficients triés qui permet d'obtenir une vue précise des impacts de chaque facteur (type d'alcalin, % de caroube, etc.) sur les réponses au pH, ainsi que sur les coordonnées euclidiennes L\*C\*h° permettant d'obtenir une couleur déterminée.

Afin d'obtenir précisément une couleur, les paramètres L\*, C\*, et \*h° doivent être respectés dans la limites des variations admissibles pour cette couleur de l'espace de couleur uniforme qui peut être défini par la mesure de la distance géométrique qui sépare des points de couleur dans cet espace.

Dans l'espace euclidien L\*a\*b\*, chaque point peut être repéré par ses coordonnées cylindriques L\*C\*h°, où L\* représente toujours la clarté, C\* représente le chroma (ou niveau de saturation) et h° représente l'angle de teinte (ou tonalité chromatique), avec :

$$C_{ab}^* = \sqrt{a^{*2} + b^{*2}}$$

$$h_{ab}^* = \arctan\left[\frac{b^*}{a^*}\right]$$

Dans cette équation a\* représentent la composante chromatique rouge-vert et b\* représentent la composante chromatique jaune-bleu.

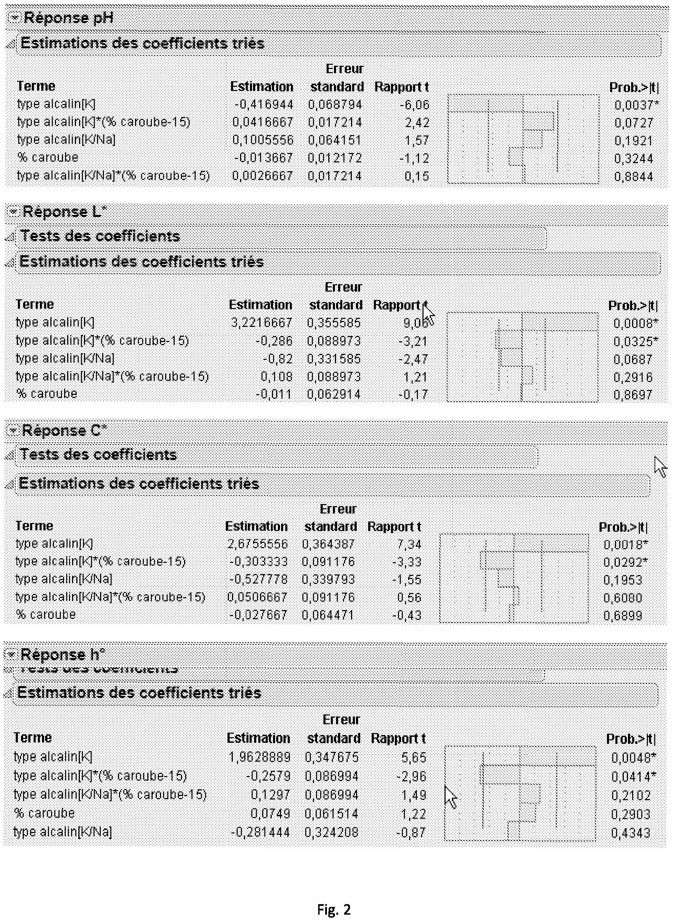

Ces estimations sont représentées dans la figure 2.

On observe ainsi que le potassium (K) a un impact significativement négatif sur le pH et a un impact significativement positif sur la couleur et les réponses L\*, C\*, et h°.

Contrairement à cela, le pourcentage de caroube n'a pas d'impact seul, ni sur le pH, ni sur la couleur.

Toutefois, sa combinaison avec le type d'alcalin (K) a un impact significatif négatif sur les réponses L\*, C\*, et h°.

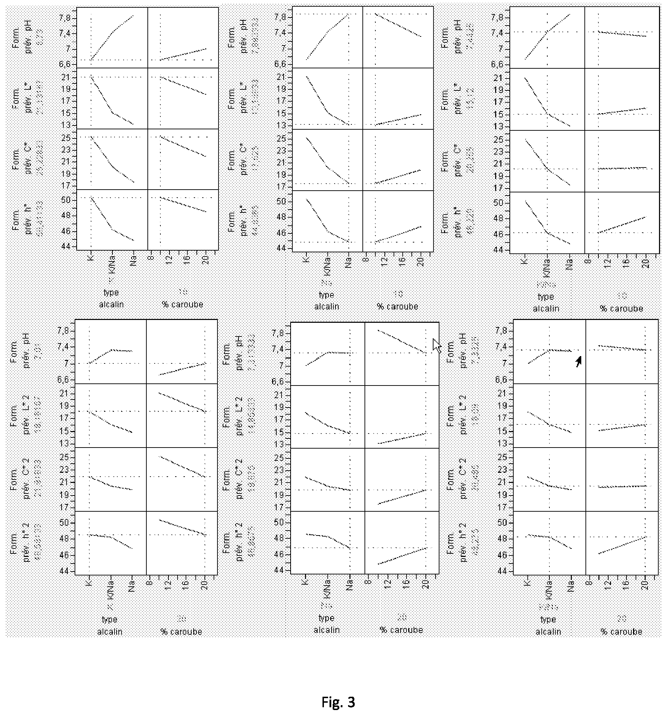

La figure 3 représente différents profileurs de courbes. On peut en conclure que selon le type d'alcalin, la combinaison avec le pourcentage de caroube donne un impact opposé.

En présence de carbonate de sodium, l'augmentation du pourcentage de caroube a un effet négatif sur le pH

EP 2 877 041 B1

et positif sur la couleur.

En présence de carbonate de potassium, l'augmentation du pourcentage de caroube a un effet positif sur le pH et négatif sur la couleur.

De plus, la gamme de couleur est plus importante quand on varie le ratio K et Na en présence de 10% de caroube, que lorsqu'on varie le ratio K et Na en présence de 20% de caroube. En effet, les couleurs peuvent varier approximativement de :

- A 10% de caroube : L=12,4-20,3 ; C=17,2-24,7 ; h=44,4-49,9 ;
- A 20% de caroube : L=14,6-17,9 ; C=19,7-21,7 ; h=47,0-48,7.

Par la suite, il suffit de rentrer dans le logiciel les couleurs et pH désirés pour connaître les paramètres optimums de la recette, en restant dans les gammes ci-dessus.

Le logiciel particulièrement utilisé dans cet exemple est le logiciel JMP / visual six sigma. Celui-ci peut être obtenu accessible à la vente dans le commerce (achat de licence). Cependant d'autres logiciels de même type peuvent être utilisés, par exemple le logiciel XLSTAT.

Dans ce cas, le logiciel utilisé est le logiciel JMP. Les profileurs de courbes obtenus sont donnés en figure 3.

Le logiciel ainsi paramétré, va permettre de déterminer par la suite les quantités de caroube et la composition alcaline optimums pour obtenir une poudre d'acidité et de couleur déterminées, valeurs que l'on aura préalablement entrées dans le logiciel.

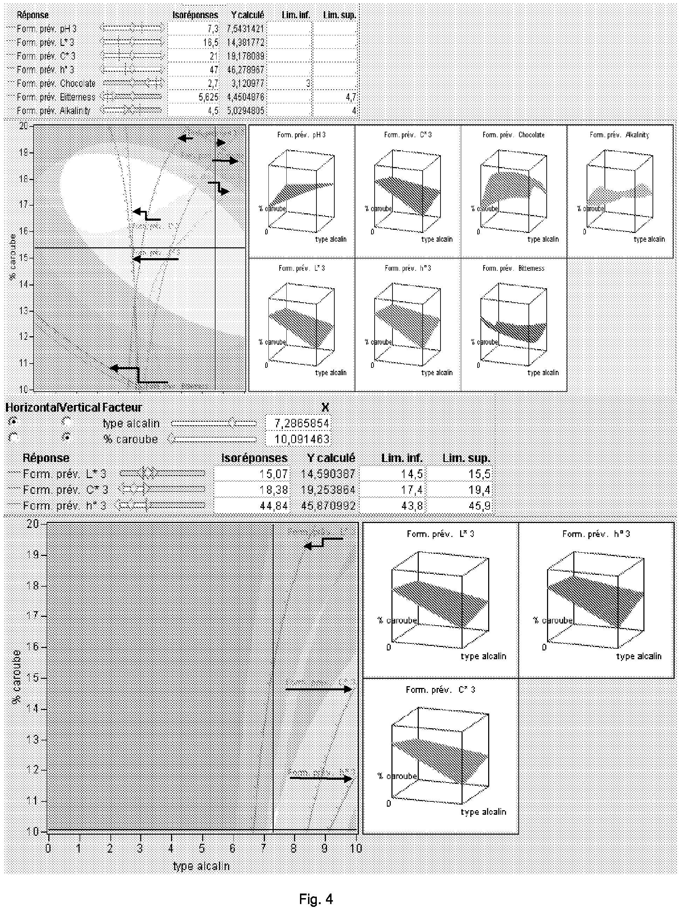

La figure 4 représente un tel calcul effectué par le logiciel. On renseigne les paramètres L*, C*, h° de couleur de la poudre attendue et le logiciel nous donne les valeurs de pourcentage en caroube et la nature et la quantité de la composition alcaline, qui vont donner le résultat le plus proche des paramètres renseignés.

**Revendications**

1. Procédé de préparation d'un mélange comprenant des grains d'au moins une espèce du genre *Théobroma* et des gousses fragmentées de caroube, **caractérisé en ce qu'**il comporte les étapes consistants à :

   - former un mélange initial comprenant lesdits grains, et entre 2,5% et 25% en poids du mélange initial, desdites gousses fragmentées de caroube, et
   - ajouter une composition alcaline audit mélange initial pour obtenir un mélange alcalinisé.

2. Procédé de préparation selon la revendication 1, dans lequel les grains appartiennent à l'espèce Théobroma cacao.

3. Procédé de préparation selon la revendication 1 ou 2, dans lequel le mélange initial est alcalinisé avec une composition alcaline comprenant au moins un composé choisi parmi le groupe constitué par les carbonates alcalins et les hydroxydes alcalins.

4. Procédé de préparation selon la revendication 3, dans lequel la composition alcaline comprend du carbonate de potassium, du carbonate de sodium et/ou du carbonate de calcium.

5. Procédé de préparation selon l'une quelconque des revendications 1 à 4, dans lequel le mélange initial comprend entre 7,5% et 12,5% de gousses fragmentées de caroube en poids total du mélange, bornes incluses.

6. Procédé de préparation selon l'une quelconque des revendications 1 à 5, dans lequel le mélange initial comprend des gousses fragmentées de caroubes ayant une taille comprise entre 1 mm à 20mm, bornes incluses.

7. Procédé de préparation selon l'une quelconque des revendications 1 à 6, comprenant les étapes supplémentaires consistant à torréfier, puis broyer le mélange alcalinisé afin d'obtenir une masse.

8. Procédé de préparation d'un mélange selon la revendication 7, dans lequel la masse comprend, bornes incluses, entre 2,5% et 25% en poids, de caroube.

9. Procédé de préparation d'un mélange selon la revendication 7 ou 8, comprenant les étapes supplémentaires consistant à :

   - presser la masse afin d'en extraire le beurre, et

- broyer le tourteau afin d'obtenir une poudre comprenant au moins une espèce du genre Théobroma et entre 5 % et 50 % en poids, de caroube, bornes incluses.

10. Procédé de préparation d'un mélange selon la revendication 9, dans lequel la poudre obtenue comprend du cacao et entre 5 % et 50 % en poids, de caroube, bornes incluses.

11. Utilisation de la masse obtenue à partir du procédé selon la revendication 7 ou 8 ou de la poudre obtenue à partir du procédé selon la revendication 9 ou 10, dans l'industrie alimentaire humaine et/ou animale, et notamment pour la fabrication de confiseries, de pâtisseries, de produits laitiers, de boissons, de glaces ou de produits salés, au goût chocolaté.

12. Procédé de préparation d'une poudre issue d'un mélange initial alcalinisé comprenant un mélange initial comprenant des grains d'une espèce végétale du genre *Théobroma,* et une composition alcaline comprenant au moins un composé alcalin, ledit mélange initial alcalinisé étant réalisé par le procédé selon les revendications 1 à 10, et ayant un pH et/ou une couleur prédéfini, ladite couleur étant définie par les paramètres L*, C* et/ou h°, ledit procédé étant **caractérisé en ce que** :

- on entre le pH et/ou la couleur prédéfini dans un logiciel de formulation paramétré,
- on obtient dudit logiciel le calcul des proportions du mélange initial alcalinisé,
- on réalise un mélange alcalinisé ayant lesdites proportions, et
- on réduit ce mélange initial alcalinisé en poudre.

13. Produit programme d'ordinateur sur un support approprié et conçu pour mettre en oeuvre le procédé selon la revendication 12, ledit programme d'ordinateur étant paramétré par la réalisation de courbes h°, C*, L* et /ou pH en fonction de la proportion de la composition alcaline dans la composition alcalinisé.


**Patentansprüche**

1. Verfahren zum Zubereiten eines Gemisches, das Körner wenigstens einer Sorte der Art *Theobroma* und fragmentierte Johannisbrothülsen enthält, **dadurch gekennzeichnet, dass** es die Schritte umfasst, die darin bestehen:

- ein anfängliches Gemisch zu bilden, das die Körner in einem Anteil im Bereich von 2,5 bis 25 Gewichts-% des anfänglichen Gemisches der fragmentierten Johannisbrothülsen enthält, und
- eine alkalische Zusammensetzung zu dem anfänglichen Gemisch hinzuzufügen, um ein alkalisiertes Gemisch zu erhalten.

2. Zubereitungsverfahren nach Anspruch 1, wobei die Körner zu der Sorte *Theobroma Cacao* gehören.

3. Zubereitungsverfahren nach Anspruch 1 oder 2, wobei das anfängliche Gemisch mit einer alkalischen Zusammensetzung alkalisiert wird, die wenigstens eine Verbindung enthält, die aus der Gruppe gewählt ist, die durch die Alkalicarbonate und die Alkalihydroxide gebildet ist.

4. Zubereitungsverfahren nach Anspruch 3, wobei die alkalische Zusammensetzung Kaliumcarbonat, Natriumcarbonat und/oder Calciumcarbonat enthält.

5. Zubereitungsverfahren nach einem der Ansprüche 1 bis 4, wobei das anfängliche Gemisch fragmentierte Johannisbrothülsen in einem Anteil im Bereich von 7,5 % bis 12,5 %, einschließlich der Grenzen, in Bezug auf das Gesamtgewicht des Gemisches enthält.

6. Zubereitungsverfahren nach einem der Ansprüche 1 bis 5, wobei das anfängliche Gemisch fragmentierte Johannisbrothülsen enthält, die eine Größe im Bereich von 1 mm bis 20 mm, einschließlich der Grenzen, besitzen.

7. Zubereitungsverfahren nach einem der Ansprüche 1 bis 6, das die zusätzlichen Schritte umfasst, die darin bestehen, das alkalisierte Gemisch zu rösten und dann zu zerkleinern, um eine Masse zu erhalten.

8. Verfahren zum Zubereiten eines Gemisches nach Anspruch 7, wobei die Masse Johannisbrot in einem Anteil im Bereich von 2,5 bis 25 Gewichts-%, einschließlich der Grenzen, enthält.

9. Verfahren zum Zubereiten eines Gemisches nach Anspruch 7 oder 8, das die weiteren Schritte umfasst, die darin bestehen:

   - die Masse zu pressen, um daraus Butter zu extrahieren, und
   - den Presskuchen zu zerkleinern, um ein Pulver zu erhalten, das wenigstens eine Sorte der Art *Theobroma* und Johannisbrot in einem Anteil im Bereich von 5 bis 50 Gewichts-%, einschließlich der Grenzen, enthält.

10. Verfahren zum Zubereiten eines Gemisches nach Anspruch 9, wobei das erhaltene Pulver Kakao und Johannisbrot in einem Anteil im Bereich von 5 bis 50 Gewichts-%, einschließlich der Grenzen, enthält.

11. Verwendung der Masse, die anhand des Verfahrens nach Anspruch 7 oder 8 erhalten wird, und des Pulvers, das anhand des Verfahrens nach Anspruch 9 oder 10 erhalten wird, in der Humannährstoff- und/oder Tiernährstoff-Industrie und insbesondere für die Fertigung von Süßigkeiten, feiner Backwaren, Molkereiprodukten, Getränken, Speiseeis oder gesalzenen Produkten mit Schokoladengeschmack.

12. Verfahren für die Zubereitung eines Pulvers, das von einem anfänglichen alkalisierten Gemisch stammt, das ein anfängliches Gemisch enthält, das Körner einer Pflanzensorte der Art *Theobroma* und eine alkalische Zusammensetzung, die wenigstens eine alkalische Verbindung enthält, umfasst, wobei das anfängliche alkalisierte Gemisch durch das Verfahren nach den Ansprüchen 1 bis 10 hergestellt wird und einen pH-Wert und/oder eine im Voraus definierte Farbe besitzt, wobei die Farbe durch die Parameter L\*, C\* und/oder h° definiert ist, wobei das Verfahren **dadurch gekennzeichnet ist, dass**:

    - der pH-Wert und/oder die im Voraus definierte Farbe in eine Software für parametrisierte Formulierung eingegeben wird,
    - von der Software die Berechnung von Anteilen des alkalisierten anfänglichen Gemisches erhalten wird,
    - ein alkalisiertes Gemisch, das die Anteile hat, hergestellt wird und
    - dieses alkalisierte anfängliche Gemisch zu einem Pulver reduziert wird.

13. Computerprogrammprodukt auf einem geeigneten Träger, das dafür ausgelegt ist, das Verfahren nach Anspruch 12 auszuführen, wobei das Computerprogramm durch die Verwirklichung von Kurven h°, C\*, L\* und/oder des pH-Werts als Funktion des Anteils der alkalischen Zusammensetzung in der alkalisierten Zusammensetzung parametrisiert ist.

## Claims

1. Method for preparing a mixture comprising grains of at least one species of the genus *Theobroma* and milled carob pods, **characterised in that** it comprises the steps of:

   - forming an initial mixture comprising said grains and, in an amount between 2.5 wt.% and 25 wt.% of the initial mixture, said milled carob pods, and
   - adding an alkaline composition to said initial mixture to obtain an alkalinised mixture.

2. Preparation method according to claim 1, wherein the grains belong to the species *Theobroma cacao.*

3. Preparation method according to either claim 1 or claim 2, wherein the initial mixture is alkalinised using an alkaline composition comprising at least one compound selected from among the group consisting of alkaline carbonates and alkaline hydroxides.

4. Preparation method according to claim 3, wherein the alkaline composition comprises potassium carbonate, sodium carbonate and/or calcium carbonate.

5. Preparation method according to any of claims 1 to 4, wherein the initial mixture comprises between 7.5 wt.% and 12.5 wt.%, inclusive, milled carob pods, based on the total weight of the mixture.

6. Preparation method according to any of claims 1 to 5, wherein the initial mixture comprises milled carob pods of a size between 1 mm and 20 mm inclusive.

7. Preparation method according to any of claims 1 to 6, comprising the additional steps of roasting and then grinding the alkalinised mixture in order to obtain a mass.

8. Method for preparing a mixture according to claim 7, wherein the mass comprises between 2.5 wt.% and 25 wt.%, inclusive, carob.

9. Method for preparing a mixture according to either claim 7 or claim 8, comprising the additional steps of:

   - pressing the mass in order to extract the butter therefrom, and
   - grinding the press cake in order to obtain a powder comprising at least one species of the genus *Theobroma* and between 5 wt.% and 50 wt.%, inclusive, carob.

10. Method for preparing a mixture according to claim 9, wherein the powder obtained comprises cocoa and between 5 wt.% and 50 wt.%, inclusive, carob.

11. Use of the mass obtained from the method according to either claim 7 or claim 8 or of the powder obtained from the method according to either claim 9 or claim 10 in the human food industry and/or animal feed industry, and in particular to produce chocolate-flavoured confectionery, pastries, dairy products, beverages, ice creams or savoury products.

12. Method for preparing a powder produced from an alkalinised initial mixture comprising an initial mixture comprising grains of a plant species of the genus *Theobroma* and an alkaline composition comprising at least one alkaline compound, said alkalinised initial mixture being produced by the method according to claims 1 to 10, and having a predefined pH and/or colour, said colour being defined by the parameters L*, C* and/or h°, said method being **characterised in that**:

   - the predefined pH and/or colour is input into parameterised formulation software,
   - the calculation of the proportions of the alkalinised initial mixture is obtained from said software,
   - an alkalinised mixture having said proportions is produced, and
   - this alkalinised initial mixture is reduced to powder.

13. Computer program product on a suitable medium and designed to implement the method according to claim 12, said computer program being parameterised by producing curves h°, C*, L* and/or pH as a function of the proportion of the alkaline composition in the alkalinised composition.

Fig. 1

## Réponse pH

### Estimations des coefficients triés

| Terme | Estimation | Erreur standard | Rapport t | | Prob.>\|t\| |
|---|---|---|---|---|---|
| type alcalin[K] | -0,416944 | 0,068794 | -6,06 | | 0,0037* |
| type alcalin[K]*(% caroube-15) | 0,0416667 | 0,017214 | 2,42 | | 0,0727 |
| type alcalin[K/Na] | 0,1005556 | 0,064151 | 1,57 | | 0,1921 |
| % caroube | -0,013667 | 0,012172 | -1,12 | | 0,3244 |
| type alcalin[K/Na]*(% caroube-15) | 0,0026667 | 0,017214 | 0,15 | | 0,8844 |

## Réponse L*

### Tests des coefficients

### Estimations des coefficients triés

| Terme | Estimation | Erreur standard | Rapport t | | Prob.>\|t\| |
|---|---|---|---|---|---|
| type alcalin[K] | 3,2216667 | 0,355585 | 9,06 | | 0,0008* |
| type alcalin[K]*(% caroube-15) | -0,286 | 0,088973 | -3,21 | | 0,0325* |
| type alcalin[K/Na] | -0,82 | 0,331585 | -2,47 | | 0,0687 |
| type alcalin[K/Na]*(% caroube-15) | 0,108 | 0,088973 | 1,21 | | 0,2916 |
| % caroube | -0,011 | 0,062914 | -0,17 | | 0,8697 |

## Réponse C*

### Tests des coefficients

### Estimations des coefficients triés

| Terme | Estimation | Erreur standard | Rapport t | | Prob.>\|t\| |
|---|---|---|---|---|---|
| type alcalin[K] | 2,6755556 | 0,364387 | 7,34 | | 0,0018* |
| type alcalin[K]*(% caroube-15) | -0,303333 | 0,091176 | -3,33 | | 0,0292* |
| type alcalin[K/Na] | -0,527778 | 0,339793 | -1,55 | | 0,1953 |
| type alcalin[K/Na]*(% caroube-15) | 0,0506667 | 0,091176 | 0,56 | | 0,6080 |
| % caroube | -0,027667 | 0,064471 | -0,43 | | 0,6899 |

## Réponse h°

### Tests des coefficients

### Estimations des coefficients triés

| Terme | Estimation | Erreur standard | Rapport t | | Prob.>\|t\| |
|---|---|---|---|---|---|
| type alcalin[K] | 1,9628889 | 0,347675 | 5,65 | | 0,0048* |
| type alcalin[K]*(% caroube-15) | -0,2579 | 0,086994 | -2,96 | | 0,0414* |
| type alcalin[K/Na]*(% caroube-15) | 0,1297 | 0,086994 | 1,49 | | 0,2102 |
| % caroube | 0,0749 | 0,061514 | 1,22 | | 0,2903 |
| type alcalin[K/Na] | -0,281444 | 0,324208 | -0,87 | | 0,4343 |

Fig. 2

Fig. 3

| Réponse | | Isoréponses | Y calculé | Lim. inf. | Lim. sup. |
|---|---|---|---|---|---|
| Form. prév. pH 3 | | 7,3 | 7,5431421 | | |
| Form. prév. L* 3 | | 16,5 | 14,381772 | | |
| Form. prév. C* 3 | | 21 | 19,178039 | | |
| Form. prév. h° 3 | | 47 | 46,278967 | | |
| Form. prév. Chocolate | | 2,7 | 3,120977 | 3 | |
| Form. prév. Bitterness | | 5,625 | 4,4504876 | | 4,7 |
| Form. prév. Alkalinity | | 4,5 | 5,0294805 | | 4 |

Horizontal Vertical Facteur | X

type alcalin | 7,2865854
% caroube | 10,091463

| Réponse | | Isoréponses | Y calculé | Lim. inf. | Lim. sup. |
|---|---|---|---|---|---|
| Form. prév. L* 3 | | 15,07 | 14,590387 | 14,5 | 15,5 |
| Form. prév. C* 3 | | 18,38 | 19,253864 | 17,4 | 19,4 |
| Form. prév. h° 3 | | 44,84 | 45,870992 | 43,8 | 45,9 |

Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012001201 A